Europäisches Patentamt

European Patent Office

Office européen des brevets

(19)

(11) EP 0 856 930 A2

(12) **EUROPÄISCHE PATENTANMELDUNG**

(43) Veröffentlichungstag:
05.08.1998 Patentblatt 1998/32

(51) Int Cl.⁶: **H02J 3/01**, H02J 3/18,
H02M 1/12

(21) Anmeldenummer: 98101652.0

(22) Anmeldetag: 30.01.1998

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: 30.01.1997 DE 19703318

(71) Anmelder: **FRAKO Kondensatoren- und Anlagenbau GmbH**
**79331 Teningen (DE)**

(72) Erfinder: **Kern, Siegfried**
**79348 Freiamt (DE)**

(74) Vertreter: **Winkler, Andreas, Dr. et al**
**FORRESTER & BOEHMERT**
**Franz-Joseph-Strasse 38**
**80801 München (DE)**

(54) **Elektrische Schaltungsanordnung und Verfahren zur verlustleistungsarmen Beeinflussung von Grundwellen-Blindstrom- und/oder Oberwellenströmen in 3-Phasen-Wechselstromnetzen mit oder ohne Nulleiter**

(57) Elektrische Schaltungsanordnung zur verlustleistungsarmen Beeinflussung von Grundwellen-Blindstrom- und/oder Oberwellenströmen in 3-Phasen-Wechselstromnetzen mit oder ohne Nulleiter, dadurch gekennzeichnet, daß

eine Induktivität (L) derart angeordnet ist, daß jedes ihrer beiden Enden mit jeder der drei bzw. vier Phasen (einschließlich Nulleiter) (L1, L2, L3 bzw. L1, L2, L3, N) über jeweils einen ansteuerbaren elektronischen Schalter (S1, S2, S3; S4, S5, S6) verbunden ist, und Verfahren zur Durchführung derselben.

Fig.1

**Beschreibung**

Die vorliegende Erfindung betrifft eine elektrische Schaltungsanordnung und ein Verfahren zur verlustleistungsarmen Beeinflussung von Grundwellen-Blindstrom- und/oder Oberwellenströmen in 3-Phasen-Wechselstromnetzen mit oder ohne Nullleiter.

Üblicherweise wird ein induktiver Blindstrom (Blindleistung), wie er z.B. in industriellen Anlagen durch Motoren und sonstige induktive Verbraucher entsteht, durch schaltbare Kondensatorstufen in sogenannten Blindleistungs-Kompensationsanlagen ausgeglichen. Dieser Ausgleich ist von Elektrizitätsversorgungsunternehmen vorgeschrieben bzw. wird bei Nichteinhaltung von gewissen Vorgaben entsprechend berechnet. Neben den Vorteilen, daß solche Anlagen bestens bewährt und relativ kostengünstig sind, haben sie die folgenden Nachteile:

- Es ist nur eine diskontinuierliche (stufige) Kompensation möglich.
- Es ist nur eine relativ langsame Reaktion (z.B. im Abstand von 10 Sekunden) auf Blindstromänderungen möglich.
- Es können keine Oberwellenströme kompensiert werden. Tendenziell werden die Oberwellenströme durch Kondensatoren sogar noch verstärkt bzw. können Resonanzen entstehen.
- Es ist nur eine kapazitive Kompensation möglich.

"Thyristor Controlled Reactor" (TCR)-Kompensatoren liefern zwar eine stufenlose Kompensation, weisen aber die Nachteile auf, daß sie selbst in erheblichem Maße Oberwellenströme erzeugen und nur induktiv wirken können. Nachdem nationale sowie internationale Vorschriften verstärkt eine Begrenzung von Oberwellenströmen verlangen, wird deren Beachtung und gegebenenfalls Kompensation immer wichtiger.

Der vorliegenden Erfindung liegt somit die Aufgabe zugrunde, eine Schaltungsanordnung und ein Verfahren zur verlustleistungsarmen Beeinflussung von Grundwellen-Blindstrom- und/oder Oberwellenströmen in 3-Phasen-Wechselstromnetzen mit oder ohne Nullleiter bereitzustellen, mit denen stufenlos einstellbare Ströme wählbarer Frequenz zur Kompensation von induktiven bzw. kapazitiven Blindströmen und/oder Oberwellenströmen erzeugt werden können.

Erfindungsgemäß wird diese Aufgabe dadurch gelöst, daß eine Induktivität (L) derart angeordnet ist, daß jedes ihrer beiden Enden mit jeder der drei bzw. vier Phasen (einschließlich Nullleiter) über jeweils einen ansteuerbaren elektronischen Schalter verbunden ist.

Diese Aufgabe wird zudem bei einem Verfahren der eingangs genannten Art dadurch gelöst, daß ansteuerbare elektronische Schalter, die jedes der beiden Enden einer Induktivität mit jeder der drei bzw. vier Phasen (einschließlich Nullleiter) verbinden, mit einer Schaltfrequenz, die wesentlich höher als die Netzfrequenz und mit dieser synchronisiert ist, automatisch geschaltet werden, wobei die Einschaltdauern während einer Netzperiode abhängig von den Amplituden der drei Phasen variiert werden.

Gemäß einer besonderen Ausführungsform kann vorgesehen sein, daß mindestens ein elektronischer Schalter eine unidirektionale Wirkung aufweist, wobei zu dem/den Schalter(n) eine jeweilige Diode in Reihe geschaltet ist.

Dabei kann vorgesehen sein, daß mindestens ein elektronischer Schalter einen Transistor umfaßt.

Darüber hinaus kann auch vorgesehen sein, daß mindestens ein elektronischer Schalter einen MOSFET umfaßt.

Außerdem kann vorgesehen sein, daß mindestens ein elektronischer Schalter einen IGBT umfaßt.

Ferner kann vorgesehen sein, daß mindestens ein elektronischer Schalter einen GTO-Thyristor umfaßt.

Wiederum kann auch vorgesehen sein, daß mindestens ein elektronischer Schalter einen MCT umfaßt.

Vorteilhafterweise ist zwischen dem 3-Phasen-Wechselstromnetz und der Induktivität ein Glättungsfilter angeordnet.

Gemäß einer weiteren besonderen Ausführungsform der Erfindung kann vorgesehen sein, daß die Schaltungsanordnung Bestandteil einer Zentralkompensationsanlage ist.

Schließlich kann vorgesehen sein, daß die Schaltunganordnung Bestandteil einer Einzelkomponensationsanlage ist.

Die Verfahrensunteransprüche betreffen vorteilhafte Weiterbildungen des Verfahrens.

Der Erfindung liegt die überraschende Erkenntnis zugrunde, daß durch die erfindungsgemäße Anordnung der Induktivität zwischen den einzelnen Phasen einstellbare Ströme wählbarer Frequenz erzeugbar sind, die zu dem im 3-Phasen-Wechselstromnetz vorhandenen Grundwellen(50 Hz)-Blindstrom und/oder den Oberwellenströmen entgegengesetzt sind, wodurch im 3-Phasen-Wechselstromnetz Ströme resultieren, die frei von Blindstrom- und/oder Oberwellenstromanteilen sind. Durch entsprechende Ansteuerung der Schalter kann der erzeugte Blindstrom sowohl kapazitiv als auch induktiv wirken. Die Änderungsgeschwindigkeit des Blindstroms kann sehr hoch sein, wodurch im Prinzip innerhalb einer Netz-Halbwelle reagiert werden kann. Andererseits kann auch ein (nahezu) beliebiger anderer Stromverlauf (bis zu einer durch interne Zeitkonstanten vorgegebenen Maximal-Frequenz) erzeugt werden.

Die Erfindung kann insbesondere für eine kontinuierliche bzw. sehr feinstufige Blindleistungskompensation - gegebenenfalls in Kombination mit einer herkömmlichen stufigen Kompensationsanlage - verwendet werden. Hierbei kann die Leistung der elektronischen Kompensation z.B. der Hälfte der kleinsten Konsensatorstufe entsprechen, da eine gleiche Leistung für induktiven wie für kapazitiven Blindstrom elektronisch erzeugt wird. Darüber hinaus sorgt die erfindungsgemäße Schaltungsanordnung für eine schnelle Reaktion zur Blindleistungskompensation gegebenenfalls in Kombination mit einer herkömmlichen stufigen Kompensationsanlage. Schließlich kann die erfindungsgemäße Schaltungsanordnung sowohl zur Kompensation von Oberwellenströmen innerhalb von Zentralkompensationsanlagen als auch innerhalb von Oberwellen-erzeugenden Geräten, z.B. auch Stromversorgungsgeräten, in Einzelkompensationsanlagen verwendet werden.

Weitere Merkmale und Vorteile der Erfindung ergeben sich aus den Ansprüchen und aus der nachstehenden Beschreibung, in der ein Ausführungsbeispiel für die erfindungsgemäße Schaltungsanordnung und deren Arbeitsprinzip anhand der schematischen Zeichnungen im einzelnen erläutert ist. Dabei zeigt:

Fig. 1 eine Prinzipschaltung der erfindungsgemäßen Schaltungsanordnung;

Fig. 2 ein Beispiel für die Ansteuerung der Schalter S1, S2,..., S6 der Schaltungsanordnung von Fig. 1;

Fig. 3 einen Ausschnitt aus Fig. 2 zur Verdeutlichung der Steuerung der Einschaltdauern der Schalter von Fig. 1; und

Fig. 4 eine Prinzipschaltung eines Steuerteils für die Steuerung der Schalter S1, S2,..., S6 von Fig. 1.

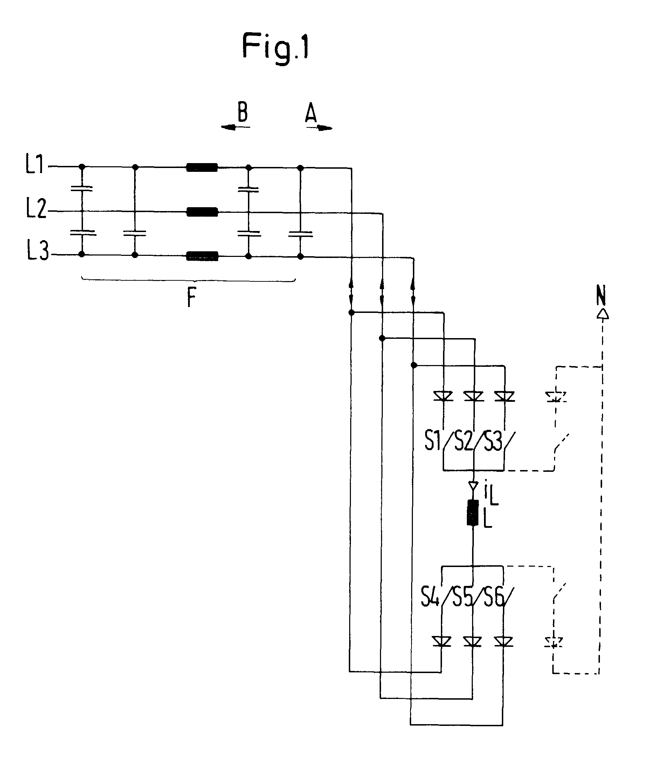

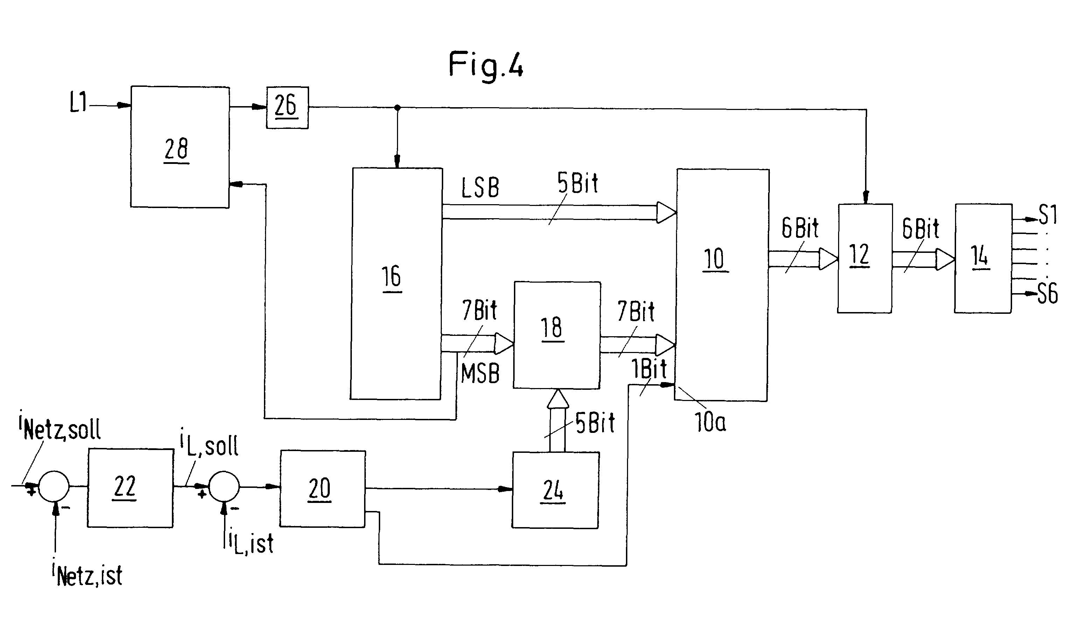

Fig. 1 zeigt eine Prinzipschaltung der erfindungsgemäßen Schaltungsanordnung für ein 3-Phasen-Wechselstromnetz. Eine Induktivität L dient als Kurzzeit-Energiespeicher. Beide Enden der Induktivität L sind mit jeder Phase L1, L2 und L3 über jeweils einen ansteuerbaren elektronischen Schalter S1, S2, S3 bzw. S4, S5, S6 verbunden. Die Schalter S1, S2 S6 sind unidirektional wirkende elektronische Schalter in Form von Transistoren, wobei jeweils eine Diode D1 bzw. D2... D6 in Reihe geschaltet ist. Zwischen dem 3-Phasen-Wechselstromnetz L1, L2, L3 und der Induktivität ist ein Glättungsfilter F angeordnet. Die vorliegende Schaltungsanordnung kann auch für ein 3-Phasen-Wechselstromnetz mit Nulleiter N, der durch eine gestrichelte Linie angedeutet ist, modifiziert werden, wobei dieser Nullleiter N auch über das Glättungsfilter F zu führen ist. Die Schalter S1, S2,..., S6 werden über ein Steuerteil (s. Fig. 4) nach einem Schaltprogramm innerhalb kurzer Zeiten geschaltet, so daß die Schaltfrequenz $1/\Delta T$ wesentlich (z.B. um den Faktor 128) höher als die Netzfrequenz $1/T$ (gleich Grundwellenfrequenz, üblicherweise 50 oder 60 Hz) ist. Im Normalbetrieb ist immer genau einer der Schalter S1, S2, S3 und genau einer der Schalter S4, S5, S6 geschlossen und sind die übrigen Schalter offen.

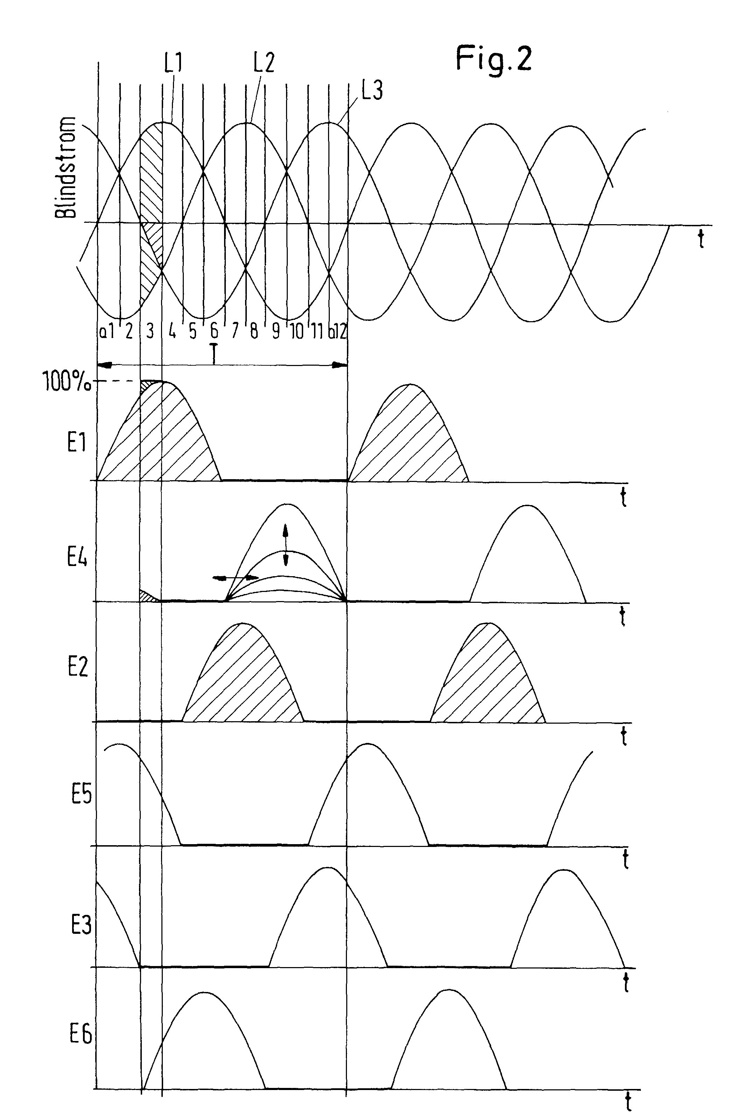

Fig. 2 zeigt ein Beispiel für die Ansteuerung der Schalter S1, S2,..., S6 der Schaltungsanordnung von Fig. 1. Im oberen Teil von Fig. 2 sind die zeitlichen Verläufe von reinen induktiven Blindströmen in den drei Phasen L1, L2, L3 des 3-Phasen-Wechselstromnetzes dargestellt. Die Phasenverschiebung zwischen den Blindströmen beträgt 120° bzw. 240°. Zur Generierung eines (sinusförmigen) Grundwellen-Blindstroms kann die gesamte Netzperiode T in zwölf prinzipiell gleiche Abschnitte a1, a2, ..., a12 unterteilt werden. Im Abschnitt a3 - beispielsweise - ist der Schalter S1 dauernd geschlossen (, d.h., es fließt nur in die Phase L1 ein positiver Strom (in Fig. 1 durch Pfeil A gekennzeichnet)), weist der Schalter S6 eine gemäß der Funktion sin (x) von 0% auf 50% der Schaltperiodendauer $\Delta T$ ansteigende Einschaltdauer E6 (, d.h., es fließt ein ansteigender negativer Strom (in Fig. 1 durch Pfeil B gekennzeichnet) in die Phase L3) und der Schalter S5 eine von 86,6% auf 50% der Schaltperiodendauer $\Delta T$ abfallende Einschaltdauer E5 auf (, d.h., es fließt ein abfallender negativer Strom in die Phase L2). Da die Summe der Einschaltdauern E5 und E6 nur am Ende des Abschnitts a3 gleich 100% der Schaltperiodendauer $\Delta T$ und davor kleiner 100% ist, muß der Strom in der verbleibenden Zeit über den Schalter S4 als "Freilauf" geschaltet werden, damit die oben genannte Bedingung

$$E4 + E5 + E6 = 100\%$$

erfüllt ist. Eine ähnliche Betrachtung kann für die übrigen elf Abschnitte a1, a2, a4, a5 a12 vorgenommen werden.

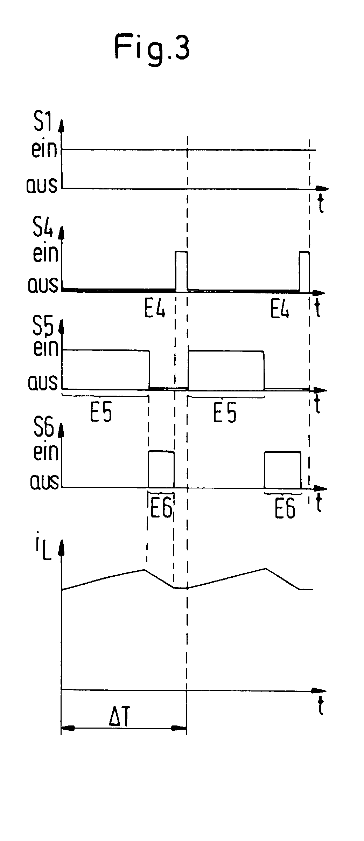

Fig. 3 zeigt ausschnitthaft das oben beschriebene Schaltprogramm für etwa die Mitte des Abschnitts a3 sowie den resultierenden Strom $i_L$ in der Induktivität L. Der Schalter S1 ist dauernd geschlossen, während die Einschaltdauer E4 bzw. E5 des Schalters S4 bzw. S5 von Schaltperiode zu Schaltperiode abnimmt und die Einschaltdauer E6 des Schalters S6 von Schaltperiode zu Schaltperiode zunimmt. Der Mittelwert des Stromes in den einzelnen Phasen L1, L2, L3 erhält mit einem derartigen Schaltprogramm näherungsweise Sinus-Form. Aufgrund der Schaltvorgänge sind den Strömen jedoch hochfrequente Schwingungen überlagert, die durch das Glättungsfilter F durch Mittelwertbildung geglättet werden. Das Glättungsfilter F übernimmt gleichzeitig auch eine gewisse EMV-Filterung. Es ist ersichtlich, daß die Amplitude des Strom-Mittelwertes der jeweiligen Phase L1, L2, L3 zu dem Strom $i_L$ proportional ist. Durch geeignete Wahl von $i_L$ kann somit die Amplitude des gewünschten Kompensationsstroms eingestellt werden. Durch eine entsprechende Änderung des Schaltprogramms kann gewählt werden, ob der Kompensationsstrom induktiven oder kapazitiven Charakter haben soll.

Zur Erzeugung bzw. Regelung gemäß Sollwertvorgabe des Stroms $i_L$ in der Induktivität L gibt es grundsätzlich zwei Möglichkeiten:

1. Einführung einer geringen Phasenverschiebung zwischen dem Schaltprogramm und der Netzspannungsphasenlage

2. Multiplikation der obigen Einschaltdauern mit einer globalen, innerhalb einer Schaltperiodendauer konstanten Größe $E_{max}$ (im obigen Beispiel würden E5 und E6 mit der Größe multipliziert, während E4 weiterhin 100%-E5-E6 entspräche).

In beiden Fällen kann zur Erhöhung des Stromes $i_L$ ein Wirkstrom-Anteil dem Netz entzogen und zur Reduktion des Stromes $i_L$ ein Wirkstrom in das Netz eingespeist werden (negativer Wirkstrom). Da die Induktivität L auch einen (geringen) ohmschen Anteil besitzt sowie die in den Schaltern S1, S2,..., S6 und sonstigen Elementen in Wärme umgesetzte Verlustleistung ersetzt werden muß, verbleibt im Durchschnitt ein (geringer) positiver Wirkstrom.

Experimentell wurde für die erste Möglichkeit ermittelt, daß bereits geringe Phasenverschiebungen zur statischen Veränderung des Blindstrom-Sollwerts in weiten Grenzen genügen, durch größere Phasenverschiebungen (max. +/- 45°) auch schnelle dynamische Veränderungen möglich sind, und die Erzeugung von Oberwellenströmen (mit der oben genannten Randbedingung) bis zu einer Frequenz von (theoretisch) der Hälfte des Kehrwerts der Schaltperiodendauer $\Delta T$ möglich ist.

Fig. 4 zeigt eine beispielhafte Prinzipschaltung eines Steuerteils für die Steuerung der Schalter S1, S2,..., S6 von Fig. 1. In einem EPROM 10 ist das gesamte Schaltprogramm gespeichert, das sich innerhalb der Netz-Periodendauer wiederholt. Von den üblicherweise 8 Bit eines Speicher-Wortes (Byte) werden 6 Bit benutzt, um über einen Speicher (Latch) 12 und einen Treiber 14 die elektronischen Schalter S1 ... S6 des Leistungsteiles gemäß Fig.1 anzusteuern. Der Speicher 12 bewirkt ein synchrones Schalten. Die Adresse des EPROMs 10 wird von einem 12-Bit-Binär-Zähler 16 erzeugt, der innerhalb einer Netzperiodendauer einmal alle 4096 Zustände annimmt. Die niederwertigen 5 Bit des Zählers 16 bilden die Schalt-Periodendauer ("$\Delta T$" in Fig. 3). Die höherwertigen 7 Bit des Zählers 16 werden über einen Addierer 18 geführt, wodurch eine Phasenverschiebung des Schaltprogrammes über einen zweiten Eingang des Zählers 16 erfolgen kann. Diese Phasenverschiebung kann in diesem Fall bis zu +/-45° betragen und wird als Stellgröße verwendet, um den Istwert von $i_l$ (gleich $i_{L,ist}$) einem Sollwert $i_{L,soll}$ mittels eines Reglers 20 nachzuregeln. Dieser wiederum wird mittels eines zweiten Reglers 22 im Sinne einer Kaskaden-Regelung zur Nachführung des Istwertes des Netzstromes $i_{Netz,ist}$ gemäß eines Netzstrom-Sollwerts $i_{Netz,soll}$ gebildet. Zwischen den analogen Reglern 20 und 22 und dem digitalen Addierer 18 ist ein Analog-/Digital-Wandler 24 vorgesehen. Der Zähler 16 wird mittels eines spannungsgesteuerten Oszillators (VCO) 26 und einer "Phase-locked-Loop"-Schaltung 28 in bekannter Weise mit seinem höchstwertigsten Bit (MSB) auf den Spannungs-Nulldurchgang einer Netzphase L1 synchronisiert. Ein weiterer Adreß-Eingang 10a des EPROMs 10 wird zur Umschaltung von "induktivem" auf "kapazitivem" Blindstrom mittels eines Bits (0 = kapazitiv, 1 = induktiv) verwendet. Bei kapazitivem Blindstrom werden die Blindströme in den Netzphasen gem. Fig. 2 invertiert. Die Schaltprogramme E1/E4 der Schalter S1/S4 usw. werden getauscht. Selbstverständlich läßt sich ein solches Schaltprogramm auch durch geeignete Programmierung eines Microcontrollers bzw. Signalprozessors realisieren.

Die in der vorangehenden Beschreibung, in den Zeichnungen sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

| | |
|---|---|
| 10 | EPROM |
| 10a | Adreß-Eingang |
| 12 | Speicher |
| 14 | Treiber |
| 16 | 12-Bit-Binär-Zähler |
| 18 | Addierer |
| 20 | Regler für Strom $i_L$ |
| 22 | Regler für Netzstrom |
| 24 | A/D-Wandler |
| 26 | spannungsgesteuerter Oszillator (VCO) |
| 28 | PLL-Schaltung |
| a1, a2,..., a12 | Abschnitt |
| D1,D2,...,D6 | Diode |
| E1,E2,...,E6 | Einschaltdauer |
| F | Glättungsfilter |
| $i_L$ | Strom in Induktivität L |
| $i_{L,ist}$ | Istwert von $i_L$ |
| $i_{L,soll}$ | Sollwert für $i_L$ |
| $i_{Netz,ist}$ | Istwert vom Netzstrom |
| $i_{Netz,soll}$ | Sollwert vom Netzstrom |
| L | Induktivität |
| L1,L2,L3 | Phase |
| N | Nullleiter |
| S1,S2,...,S6 | Schalter |
| T | Netzperiode |
| 1/T | Netzfrequenz |
| $\Delta T$ | Schaltperiode |
| $1/\Delta T$ | Schaltfrequenz |
| A | Richtung des positiven Stroms |
| B | Richtung des negativen Stroms |

### Patentansprüche

1. Elektrische Schaltungsanordnung zur verlustleistungsarmen Beeinflussung von Grundwellen-Blindstrom- und/oder Oberwellenströmen in 3-Phasen-Wechselstromnetzen mit oder ohne Nullleiter, dadurch gekennzeichnet, daß eine Induktivität (L) derart angeordnet ist, daß jedes ihrer beiden Enden mit jeder der drei bzw. vier Phasen (einschließlich Nullleiter) (L1, L2, L3 bzw. L1, L2, L3, N) über jeweils einen ansteuerbaren elektronischen Schalter (S1, S2, S3; S4, S5, S6) verbunden ist.

2. Elektrische Schaltungsanordnung nach Anspruch 1, dadurch gekennzeichnet, daß mindestens ein elektronischer Schalter (S1, S2, S3, S4, S5, S6) eine unidirektionale Wirkung aufweist, wobei zu dem/den Schalter(n) eine jeweilige Diode (D1, D2, D3, D4, D5, D6) in Reihe geschaltet ist.

3. Elektrische Schaltungsanordnung nach Anspruch 1 oder 2, dadurch gekennzeichnet, daß mindestens ein elektronischer Schalter (S1, S2, S3, S4, S5, S6) einen Transistor umfaßt.

4. Elektrische Schaltungsanordnung nach einem der Ansprüche 1 bis 3, dadurch gekennzeichnet, daß mindestens ein elektronischer Schalter ($S_1$, S2, S3, S4, S5, S6) einen MOSFET umfaßt.

5. Elektrische Schaltungsanordnung nach einem der Ansprüche 1 bis 4, dadurch gekennzeichnet, daß mindestens ein elektronischer Schalter (S1, S2, S3, S4, S5, S6) einen IGBT umfaßt.

6. Elektrische Schaltungsanordnung nach einem der Ansprüche 1 bis 5, dadurch gekennzeichnet, daß mindestens ein elektronischer Schalter (S1, S2, S3, S4, S5, S6) einen GTO-Thyristor umfaßt.

7. Elektrische Schaltungsanordnung nach einem der Ansprüche 1 bis 6, dadurch gekennzeichnet, daß mindestens ein elektronischer Schalter (S1, S2, S3, S4, S5, S6) einen MCT umfaßt.

8. Elektrische Schaltungsanordnung nach einem der vorangehenden Ansprüche, dadurch gekennzeichnet, daß zwischen dem 3-Phasen-Wechselstromnetz (L1, L2, L3 bzw. L1, L2, L3, N) und der Induktivität (L) ein Glättungsfilter (F) angeordnet ist.

9. Elektrische Schaltungsanordnung nach einem der vorangehenden Ansprüche, dadurch gekennzeichnet, daß die Schaltungsanordnung Bestandteil einer Zentralkompensationsanlage ist.

10. Elektrische Schaltungsanordnung nach einem der Ansprüche 1 bis 8, dadurch gekennzeichnet, daß die Schaltungsanordnung Bestandteil einer Einzelkompensationsanlage ist.

11. Verfahren zur verlustleistungsarmen Beeinflussung von Grundwellen-Blindstrom- und/oder Oberwellenströmen in 3-Phasen-Wechselstromnetzen mit oder ohne Nullleiter, dadurch gekennzeichnet, daß ansteuerbare elektronische Schalter, die jedes der beiden Enden einer Induktivität mit jeder der drei bzw. vier Phasen (einschließlich Nullleiter) verbinden, mit einer Schaltfrequenz, die wesentlich höher als die Netzfrequenz und mit dieser synchronisiert ist, automatisch geschaltet werden, wobei die Einschaltdauern während einer Netzperiode abhängig von den Amplituden der drei Phasen variiert werden.

12. Verfahren nach Anspruch 11, dadurch gekennzeichnet, daß zu jedem Zeitpunkt jeweils genau ein Schalter an jedem Ende der Induktivität geschlossen ist.

13. Verfahren nach Anspruch 11 oder 12, dadurch gekennzeichnet, daß der erzeugte Strom mittels eines Glättungsfilters geglättet wird.

14. Verfahren nach einem der Ansprüche 11 bis 13, dadurch gekennzeichnet, daß das Schalten der Schalter mittels eines in einer Speichereinheit gespeicherten Programms erfolgt.

15. Verfahren nach einem der Ansprüche 11 bis 14, dadurch gekennzeichnet, daß der Strom abhängig vom Netzstrom geregelt wird.

16. Verfahren nach einem der Ansprüche 11 bis 15, dadurch gekennzeichnet, daß induktive Blindströme kompensiert werden.

17. Verfahren nach einem der Ansprüche 11 bis 15, dadurch gekennzeichnet, daß kapazitive Blindströme kompensiert werden.

18. Verfahren nach einem der Ansprüche 11 bis 17, dadurch gekennzeichnet, daß Oberwellenströme kompensiert werden.

19. Verfahren nach einem der Ansprüche 11 bis 18, dadurch gekennzeichnet, daß der Betrag des erzeugten Stromes durch Phasenverschiebung der Synchronisation zwischen dem periodischen Schaltvorgang und dem Netzstrom verändert wird.

20. Verfahren nach einem der Ansprüche 11 bis 18, dadurch gekennzeichnet, daß der Betrag des erzeugten Stromes durch Variation der Einschaltdauern verändert wird.

# Fig.1

Fig.2

# Fig.3

# Fig.4

EP 0 856 930 A2